Europäisches Patentamt

European Patent Office

Office européen des brevets

(19)

(11) Veröffentlichungsnummer: **0 166 162 B1**

(12) ## EUROPÄISCHE PATENTSCHRIFT

(45) Veröffentlichungstag der Patentschrift: **17.07.91**

(51) Int. Cl.5: **H02J 7/14**

(21) Anmeldenummer: **85105975.8**

(22) Anmeldetag: **15.05.85**

(54) **Spannungsregler für einen Generator.**

(30) Priorität: **28.06.84 DE 3423767**

(43) Veröffentlichungstag der Anmeldung:
**02.01.86 Patentblatt 86/01**

(45) Bekanntmachung des Hinweises auf die
Patenterteilung:
**17.07.91 Patentblatt 91/29**

(84) Benannte Vertragsstaaten:
**DE FR GB SE**

(56) Entgegenhaltungen:
**DE-A- 2 150 622**
**DE-A- 2 810 100**
**GB-A- 2 000 648**
**US-A- 3 296 516**

**Schrüfer,E, Zuverlässigkeit von Mess-und
Automatisierungseinrichtungen, Seiten
IV,V,168,169,190,191,216,217,222-225**

(73) Patentinhaber: **ROBERT BOSCH GMBH
Postfach 50
W-7000 Stuttgart 1(DE)**

(72) Erfinder: **Günther, Uwe, Dipl.-Ing.
Hagstrasse 38
W-7031 Nufringen(DE)**
Erfinder: **Kohl, Walter
Im Feldle 12
W-7120 Bietigheim(DE)**
Erfinder: **Nagel, Karl
Grundstrasse 24
W-7413 Gomaringen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### Stand der Technik

Die Erfindung geht aus von einem Spannungsregler für einen Generator nach der Gattung des Hauptanspruches.

Aus der SE-PS 7 702 656-5 (entspricht der DE-A-2810100), ist bereits ein Spannungsregler für einen Generator in einem Kraftfahrzeug bekannt, der einen Temperatursensor zur Erfassung der Batterietemperatur besitzt. Bei niederer Batterietemperatur wird der Spannungsregler aufgrund des Meßsignales des Temperatursensors die Ausgangsspannung des Generators erhöhen, bei hoher Temperatur erniedrigen, um so die Ladespannung der Temperatur anzupassen. Dieser Spannungsregler besitzt weiterhin eine interne Spannungsquelle, deren Ausgangsspannung proportional zur Reglertemperatur ist. Ist an den Regler kein Temperatursensor angeschlossen bzw. ist die Leitung zwischen Temperatursensor und Spannungsregler unterbrochen, so wird diese Ausgangsspannung zur Temperaturerfassung herangezogen.

Eine Einrichtung zum Laden eines Akkumulators ist aus der DE-A 21 50 622 bekannt. Dabei wird die Temperatur des Akkumulators mit einem Temperatursensor gemessen. Die Temperaturmeßwerte werden einem Spannungsregler zugeführt, der die Ladespannung so regelt, daß sie mit sinkender Temperatur zunimmt. Damit die Spannung bei tiefen Temperaturen keine unzulässig hohen Werte erreichen kann, ist eine bestimmte Maximalspannung festgelegt, die nicht überschritten werden kann. Eine Überwachung des Temperatursensors ist aus dieser Anordnung in sofern bekannt als, bei einem Defekt des Temperatursensors, der eine tiefe Temperatur vortäuscht, die Ladespannung mittels Diode begrenzt.

Auch aus der GB-A 2 000 648 ist ein Batterieladesystem bekannt, bei dem die Batterietemperatur gemessen wird und die Ladespannung mit sinkender Batterietemperatur erhöht wird, jedoch nur in einem Temperaturintervall zwischen -30° C und +80° C. Unterhalb bzw. oberhalb dieser Temperaturen findet lediglich eine Begrenzung der Generatorspannung auf einen Normalwert statt.

Maßnahmen zur Erkennung eines Fehlers des Temperatursensors sind also nicht vorgesehen, tritt ein solcher Fehler dennoch auf, wird die Ladespannung je nach aufgetretenem Defekt entweder dem Grenzwert der -30° C-Spannung oder dem Grenzwert der +80° C-Spannung, gegebenenfalls auch einem je nach Fehler des Temperatursensors irgendwo dazwischenliegenden Wert entsprechen. Eine temperaturabhängige Spannungsregelung im Falle eines defekten Temperatursensors ist jedoch nicht vorgesehen.

Die Aufgabe der vorliegenden Erfindung liegt darin, einen Spannungsregler der gattungsgemäßen Art derart weiterzubilden, daß auch bei einem Defekt des angeschlossenen Temperatursensors oder der Zuleitung eine unzulässige Erhöhung oder Erniedrigung der Generatorausgangsspannung verhindert wird und bei erkanntem Defekt Redundanz auf eine temperaturabhängige Referenzsignalquelle zur Spannungsregelung umgeschaltet wird.

Gelöst wird diese Aufgabe durch die kennzeichnenden Merkmale des Anspruchs 1.

### Vorteile der Erfindung

Der erfindungsgemäße Spannungsregler nach der Gattung des Hauptanspruches hat demgegenüber den Vorteil, daß ein Defekt eines angeschlossenen Temperatursensors oder der Zuleitung erkannt wird, so daß es nicht zu einer unzulässigen Erhöhung oder Erniedrigung der Generatorausgangsspannung kommt.

Durch die Unteransprüche sind weitere vorteilhafte Ausgestaltungen der Erfindung angegeben. Das vorgegebene Maß von Abweichung kann entweder eine feste Schwelle, aber auch parameterabhängig sein, etwa eine Funktion des Ladungszustandes der Batterie sein. Es ist auch möglich, die Abweichung zwischen Temperatursignal und Referenzsignal als Übernahmekriterium heranzuziehen. Liefert der Temperatursensor ein zur Batterietemperatur proportionales Spannungssignal, so ist eine Überwachung besonders einfach mit Hilfe eines Fensterkomparators möglich, dessen Ausgangssignal die Umschaltung zwischen externem Temperatursensor und interner Vergleichspannung als Referenzsignalquelle steuert. Eine Zeitbewertungsschaltung unterdrückt ein Umschalten bei kurzen Störimpulsen auf der Zuleitung, die etwa von der Zündanlage eingestreut sein können, so daß ein sicherer Betrieb gewährleistet ist. Eine Fehleranzeige bei einer Umschaltung auf die interne Referenzsignalquelle, etwa durch Aufleuchten einer Lampe im Kraftfahrzeug, signalisiert einen vorliegenden Defekt der Temperaturerfassung der Batterietemperatur, der beim nächsten Werkstattaufenthalt behoben werden kann.

### Zeichnung

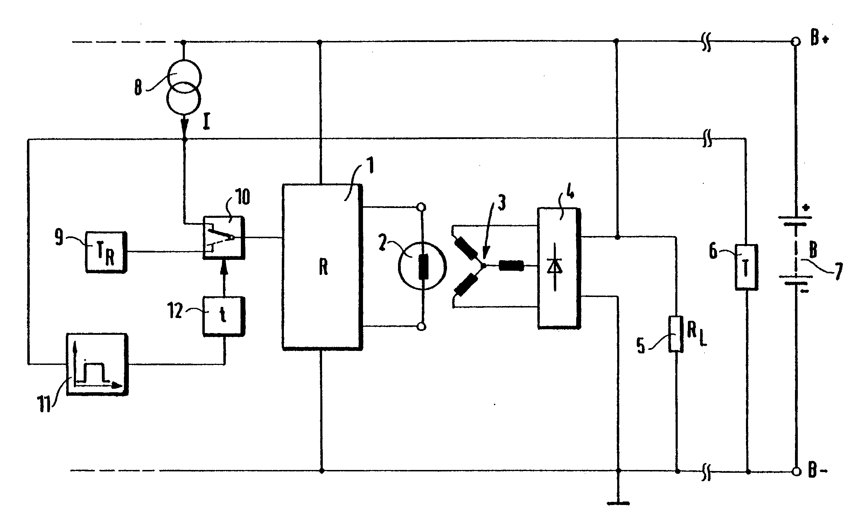

Ein Ausführungsbeispiel der Erfindung ist in der Zeichnung dargestellt und in der nachfolgenden Beschreibung näher erläutert. Die einzige Figur zeigt einen erfindungsgemäßen Spannungsregler, der den Erregerstrom eines Drehstromgenerators in einem Kraftfahrzeug steuert.

### Beschreibung des Ausführungsbeispieles

Ein Regler 1 steuert den Erregerstrom eines Drehstromgenerators mit einer Erregerwicklung 2 und einer Statorwicklung 3 in einem Kraftfahrzeug. Die in der Statorwicklung 3 induzierte Leistung wird in einem Gleichrichter 4 gleichgerichtet und an das Bordnetz des Kraftfahrzeuges angeschlossen, so daß die Plusdioden an die positive Versorgungsspannung $B^+$, die Minusdioden an die negative Versorgungsspannung $B^-$ bzw. an die Pole einer Batterie 7 angeschlossen sind. Die Verbraucher des Kraftfahrzeuges sind durch einen Widerstand 5, der zwischen die Ausgangsklemmen des Gleichrichters 4 geschlossen ist, dargestellt. Diese vereinfachte Darstellung einer Spannungsregelung in einem Kraftfahrzeug mit Hilfe eines Drehstromgenerators ist dem Fachmanne bekannt und zur Vereinfachung der Darstellung nicht weiter erläutert.

Ein Temperatursensor 6 wird von einer Konstantstromquelle 8 mit einem Strom I versorgt, so daß über dem Temperatursensor 6 eine Spannung abfällt, die proportional zur Temperatur des Temperatursensors 6 ist. Der Temperatursensor 6 ist dabei in räumlicher Nähe der Batterie 7 angebracht, vorzugsweise unterhalb der Batterie, so daß die Temperatur des Temperatursensors 6 mit der Batterietemperatur übereinstimmt.

Der Temperatursensor 6 weist eine Zenerdiodencharakteristik auf, d.h. bei einem von der Stromquelle 8 eingeprägten Strom I besitzt der Temperatursensor 6 einen so geringen differentiellen Widerstand, daß die Abhängigkeit der Ausgangsspannung des Temperatursensors 6 vom Strom I der Stromquelle 8 vernachlässigbar ist. Zur Sicherheit weist der Temperatursensor 6 noch eine Strombegrenzung bei großen Strömen auf, wie sie im Fehlerfall, etwa bei Kurzschluß mit der positiven Versorgungsspannung $B^+$, auftreten könnte, um eine Zerstörung des Temperatursensors 6 zu vermeiden. Der Temperatursensor 6 ist monolitisch integriert und zur Vereinfachung der Darstellung ebenfalls nicht weiter erläutert.

Die Ausgangsspannung des Temperatursensors 6 wird auf einen Kontakt eines Schalters 10 geführt, dessen Schaltkontakt mit einem Eingang des Reglers 1 verbunden ist. Über diesen Eingang erfährt der Regler 1 die Battrietemperatur, und regelt darauf in bekannter Weise die Ausgangsspannung des Drehstromgenerators. Ein anderer Kontakt des Schalters 10 ist mit dem Ausgang einer Referenzsignalquelle 9 verbunden.

Die Ausgangsspannung des Temperatursensors 6 wird weiterhin auf einen Fensterkomparator 11 geführt, der ein positives Signal abgibt, wenn die Ausgangsspannung des Temperatursensors 6 innerhalb eines durch eine obere und untere Schaltschwelle vorgegebenen Meßfensters liegt. Die beiden Schaltschwellen des Fensterkomparators 11 sind vom Hersteller des Spannungsreglers fest eingestellt und definieren die Umschaltpunkte des Schalters 10. Liegt die Ausgangsspannung des Temperatursensors 6 außerhalb des Meßfensters, so liefert der Fensterkomparator 11 ein negatives Signal, was zu einer Umschaltung des Schalters 10 auf die Referenzsignalquelle 9 führt, die im Inneren des Reglers 1 integriert ist, jedoch in der Zeichnung zur besseren Übersicht getrennt herausgeführt ist. Die interne Referenzsignalquelle 9 erfaßt die Temperatur des Reglers 1, d.h. bei umgeschaltetem Schalter 10 ergibt sich eine herkömmliche Spannungsregelung, in Abhängigkeit von der Gehäusetemperatur des Reglers.

Bei Störungen auf der Zuleitung zum Temperatursensor 6 oder bei Ausfall des Temperatursensors 6 selber, liegt die Ausgangsspannung außerhalb des durch den Fensterkomparator 11 definierten Meßfensters und der Temperatursensor 6 wird abgeschaltet, was zu einer höheren Betriebssicherheit führt.

Eine Zeitbewertungsschaltung 12 ist zwischen den Fensterkomparator 11 und den Schalter 10 geschaltet. Diese Zeitbewertungsschaltung 12 verhindert, daß kurze Störimpulse auf der Zuleitung des Temperatursensors 6 zu einem Umschalten des Schalters 10 führen. Diese kurzen Störimpulse können durch Einstreuung etwa von der Zündleitung oder der Steuerleitung der Einspritzventile herrühren. In einfacher Ausgestaltung ist die Zeitbewertungsschaltung 12 als ein Integrierer ausgeführt, der das Ausgangssignal des Fensterkomparators 11 integriert und erst ab Unterschreiten einer vorgegebenen Schwelle den Schalter 10 umschaltet.

Selbstverständlich ist die Erfindung nicht auf das hier gewählte Ausführungsbeispiel beschränkt. Eine andere Form der Temperaturerfassung an der Batterie ist ebenfalls möglich, etwa mit einem integrierten Temperatursensor, der eine Pulsfolge liefert, deren Tastverhältnis proportional zur erfaßten Temperatur ist. Dann wird der Regler 1 als ein Mikrorechner ausgeführt sein, der das Tastverhältnis erfaßt und eine Umschaltung auf eine interne Referenzsignalquelle per Software steuert. Die Bauteile 8 bis 12 des Ausführungsbeispieles können leicht im Regler 1 integriert werden.

## Patentansprüche

1. Spannungsregler für einen Generator (2, 3), der eine Batterie (7) lädt, mit einem Temperatursensor (6) zur Erfassung der Batterietemperatur, der ein von der Batterietemperatur abhängiges elektrisches Temperatursignal abgibt und mit einer Referenzsignalquelle (9) im Spannungsregler, die eine von der Reglertemperatur abhängige Spannung abgibt, dadurch gekennzeichnet, daß ein Fensterkomparator (11) vorgesehen ist, der ein Meßfenster definiert und dem das Temperatursignal des Temperatursensors (6) zugeführt wird, wobei der Fensterkomparator (11) ein Ausgangssignal abgibt, das einen ersten Wert annimmt, wenn die Spannung des Temperatursensors innerhalb des Meßfensters und einen zweiten Wert annimmt, wenn sie außerhalb des Meßfensters liegt, wobei bei Vorliegen des ersten Wertes das Ausgangssignal des Temperatursensors (6) und bei Vorliegen des zweiten Wertes die Spannung der Referenzsignalquelle (9) zur Spannungsregelung verwendet wird.

2. Spannungsregler nach Anspruch 1, dadurch gekennzeichnet, daß der Fensterkomparator (11) über einen Schalter (10) mit dem Regler (1) verbunden ist, wobei der Schalter (10) in Abhängigkeit vom Ausgangssignal des Fensterkomparators (11) den Temperatursensor (8) oder die Referenzsignalquelle (9) mit dem Regler (1) verbindet.

3. Spannungsregler nach Anspruch 2, dadurch gekennzeichnet, daß zwischen dem Fensterkomparator (11) und dem Schalter (10) eine Zeitbewertungsschaltung (12) geschaltet ist, die verhindert, daß kurze Impulse des Fensterkomparators (11) zu einem Umschalten des Schalters (10) führen.

4. Spannungsregler nach einem der Ansprüche 1 bis 3, dadurch gekennzeichnet, daß dann eine Fehleranzeige durchgeführt wird, wenn die Spannung der Referenzsignalquelle (9) dem Regler (1) zugeführt wird.

5. Spannungsregler nach einem der vorhergehenden Ansprüche, dadurch gekennzeichnet, daß zumindest die Referenzsignalquelle (9), der Fensterkomparator (11) und der Schalter (10) gemeinsam monolithisch integriert sind.

## Claims

1. Voltage regulator for a generator (2, 3), which charges a battery (7), having a temperature sensor (6) for measuring the battery temperature, which transmits an electrical temperature signal dependent on the battery temperature, and having a reference signal source (9) in the voltageregulator, which transmits a voltage dependent on the regulator temperature, characterised in that a window comparator (11) is provided, which defines a measuring window and to which the temperature signal of the temperature sensor (6) is fed, the window comparator (11) transmitting an output signal which assumes a first value when the voltage of the temperature sensor is situated inside the measuring window, and assumes a second value when it is situated outside the measuring window, it being the case that given the occurrence of the first value the output signal of the temperature sensor (6) is used for the purpose of voltage regulation, and given the occurrence of the second value the voltage of the reference signal source (9) is used.

2. Voltage regulator according to Claim 1, characterised in that the window comparator (11) is connected via a switch (10) to the regulator (1) the switch (10) connecting the temperature sensor (8) or the reference signal source (9) to the regulator (1), depending on the output signal of the window comparator (11).

3. Voltage regulator according to Claim 2, characterised in that there is connected between the window comparator (11) and the switch (10) a time weighting circuit (12) which prevents short pulses of the window comparator (11) from leading to a changeover of the switch (10).

4. Voltage regulator according to one of Claims 1 to 3, characterised in that a defect display is executed when the voltage of the reference signal source (9) is fed to the regulator (1).

5. Voltage regulator according to one of the preceding claims, characterised in that at least the reference signal source (9), the window comparator (11) and the switch (10) are jointly monolithically integrated.

## Revendications

1. Régulateur de tension pour un générateur (2, 3) qui alimente une batterie (7), comportant un capteur de température (6) pour détecter la température de la batterie et fournit un signal électrique de température dépendant de la température de la batterie et une source de signal de référence (9) dans le régulateur de tension, qui fournit une tension dépendant de la température du régulateur, régulateur caractérisé par un comparateur à fenêtre (11) qui définit une fenêtre de mesure et applique le signal de température du capteur de température (6) à ce comparateur (11) qui émet un signal de sortie prenant une première valeur lorsque la tension du capteur de température se trouve dans la fenêtre de mesure et une seconde valeur lorsque la tension est à l'extérieur de la fenêtre de mesure, et en présence de la première valeur, on utilise le signal de sortie du capteur de température pour réguler la tension et en présence de la seconde valeur, on utilise la tension de la source de signal de référence (9).

2. Régulateur de tension selon la revendication 1, caractérisé en ce que le comparateur à fenêtre (11) est relié au régulateur (1) par un commutateur (10) qui relie en fonction du signal de sortie du comparateur de fenêtre (11), le capteur de température (8) ou la source de signal de référence (9) au régulateur (1).

3. Régulateur de tension selon la revendication 3, caractérisé par un circuit d'exploitation de temps (12) entre le comparateur à fenêtre (11) et le commutateur (10), ce circuit évitant que de courtes impulsions dans le comparateur à fenêtre (11) ne provoquent la commutation du commutateur (10).

4. Régulateur de tension selon l'une des revendications 1 à 3, caractérisé par un affichage d'erreur lorsque la tension de la source du signal de référence (9) est fournie au régulateur (1).

5. Régulateur de tension selon l'une des revendications précédentes, caractérisé en ce qu'au moins la source de signal de référence (9), le comparateur à fenêtre (11) et le commutateur (10) sont intégrés en commun, de manière monolithique.